# EUROPÄISCHE PATENTSCHRIFT

(11) **EP 1 389 418 B1**
(45) Veröffentlichungstag und Bekanntmachung des Hinweises auf die Patenterteilung: **13.09.2006**
(21) Anmeldenummer: 02405695.4
(22) Anmeldetag: 14.08.2002
(51) Int. Cl.: A01G 9/22

(54) **Beschattungseinrichtung für lichtdurchlässige Flächenelemente**
Shading device for transparent surface elements
Dispositif de protection solaire pour des éléments de surface transparents

(43) Veröffentlichungstag der Anmeldung: 18.02.2004
(73) Patentinhaber: Fehr, Walter, 4800 Zofingen (CH)
(72) Erfinder: Fehr, Walter, 4805 Brittnau (CH); Achermann, Stefan, 5046 Schmiedrued (CH)
(74) Vertreter: BOVARD AG

(56) Entgegenhaltungen:
- WO-A-85/00633
- DE-U- 29 824 480
- GB-A- 2 166 480
- US-A- 4 390 054

## Beschreibung

Die vorliegende Erfindung bezieht sich auf eine Beschattungseinrichtung für lichtdurchlässige Flächenelemente, insbesondere für Glasflächenelemente von Wintergärten, gemäss dem Oberbegriff des Patentanspruchs 1.

Eine solche Einrichtung ist aus WO-A-8500633 bekannt.

Derartige Beschattungseinrichtungen sind bekannt. Üblicherweise bestehen diese Beschattungseinrichtungen aus einer Stoffbahn, welche entlang seitlich angebrachter Führungsschienen von einer Welle abwickelbar bzw. auf diese Welle aufwickelbar sind, wobei in den seitlichen Führungsschienen die mit der Welle zusammenwirkenden Zugelemente untergebracht sind. Vielfach ist am Anfang dieser Stoffbahn noch eine so genannte Fallstange angebracht, um zu gewährleisten, dass die abgewickelte Stoffbahn möglichst gut gespannt ist.

Derartige Beschattungsanlagen sind ausschliesslich dazu geeignet, eine rechteckförmige lichtdurchlässige Fläche abzudecken. Diese Fläche kann aus einzelnen Flächenelementen zusammengesetzt sein, die nicht rechteckförmig sein müssen, diese Flächenelemente können aber nicht einzeln abgedeckt werden.

Vielfach werden Wintergärten aber nicht nur rechteckförmige Flächen aufweisen, da diese beispielsweise in architektonischer und ästhetischer Sicht an Gebäude angepasst werden müssen. Hierbei werden neben rechteckförmigen Flächenelemente auch solche verwendet, die trapezförmig oder dreieckförmig sind. Mit der vorgängig beschriebenen Beschattungseinrichtung ist es aber oftmals nicht möglich, derartig zusammengesetzte Wintergärten in optimaler Weise zu beschatten, und vielfach wären derartige Einrichtungen in optischer Hinsicht auch nicht geeignet.

Die Aufgabe der vorliegenden Erfindung besteht nun darin, eine Beschattungseinrichtung zu schaffen, mit welcher auch nicht rechteckfömige Flächenelemente von Wintergärten abgedeckt werden können, und bei welcher die die Flächenelemente abdeckbaren Stoffteile in einfacher und optimaler Weise gespannt sind.

Erfindungsgemäss erfolgt die Lösung dieser Aufgabe durch die im unabhängigen Patentanspruch 1 aufgeführten Merkmale.

Mit dieser Lösung können dreieckförmige, trapezförmige und auch rechteckförmige Flächenelemente in optimaler Weise abgedeckt werden, wobei neben der gewünschten Beschattung auch in ästhetischer Hinsicht eine optimale Lösung erreicht wird. Die jeweiligen die Flächenelemente abdeckbaren Stoffteile sind immer optimal gespannt, ob sie nun voll oder nur teilweise ausgefahren sind.

In vorteilhafter Weise ist am abwickelseitigen Ende des Stoffteils eine erste Profilschiene angebracht, die sich mindestens über einen Teil der Länge des im wesentlichen parallel zur Welle ausgerichteten Endes des Stoffteils erstreckt, welche erste Profilschiene mindestens eine längs verlaufende Rille aufweist, in welcher die ersten Umlenkmittel einschiebbar und in einer gewünschten Position fixierbar sind. Dadurch können die ersten Umlenkmittel in einfacher Weise in eine optimale Position gebracht werden, welche eine optimale Spannung des Stoffteils gewährleistet.

In vorteilhafter Weise sind die an den Tragteilen befestigten Haltemittel aus einer zweiten Profilschiene gebildet, die mindestens eine längsverlaufende Rille aufweist, in welcher die zweiten Umlenkmittel einschiebbar und in einer gewünschten Position fixierbar sind. Somit lassen sich auch die zweiten Umlenkmittel in einfacher Weise in die Position bringen, die eine optimale Spannung des Stoffteils gewährleistet.

Eine weitere vorteilhafte Ausgestaltung der Erfindung besteht darin, dass die erste Profilschiene und die zweite Profilschiene jeweils mit einer Längsnut versehen sind, welche der jeweiligen Rille gegenüberliegend ist und welche einen kreisförmigen Querschnitt mit einem verengten, längsverlaufenden Spalt aufweist, dessen Öffnung in einem der Rille abgewandten Bereich der ersten Profilschiene bzw. zweiten Profilschiene verläuft. In dieser Rille lassen sich Befestigungsmittel anbringen, mit welchen der Rand des Stoffteils gehalten wird bzw. sich die Halterung an den Tragteilen bewerkstelligen lässt.

Die ersten Umlenkmittel und die zweiten Umlenkmittel sind jeweils aus Rollenanordnungen gebildet, wobei jede Rollenanordnung aus Rollen besteht, die zwischen Plättchen drehbar gehalten sind, und die beiden äusseren Plättchen jeweils mit einem Steg versehen sind, welcher jeweils in eine in der Rille der ersten Profilschiene und der zweiten Profilschiene angebrachte Längsausnehmung passend ist. Dadurch wird erreicht, dass die Rollenanordnungen in die entsprechende Profilschiene einschiebbar ist, und die seilartigen Teile in der Rille der jeweiligen Profilschiene verlaufen können und somit nicht sichtbar sind.

Die Schlaufe wird vom Zugseil, mit dem sie verbunden ist, zur ersten Rollenanordnung der zweiten Umlenkmittel, zur ersten Rollenanordnung der ersten Umlenkmittel, zur zweiten Rollenanordnung der ersten Umlenkmittel, zur zweiten Rollenanordnung der zweiten Umlenkmittel und über die erste Rollenanordnung der zweiten Umlenkmittel zurück zum Zugseil geführt, wodurch die optimale Spannung des Stoffteils gewährleistet ist.

Um die Schlaufe optimal führen zu können, sind zwischen der Verbindung mit dem Zugseil und der ersten Rollenanordnung der zweiten Umlenkmittel weitere Umlenkrollen vorgesehen, die am entsprechenden Endbereich der zweiten Profilschiene angebracht sind.

Zur Erreichung einer geordneten Wicklung des Zugseils auf der Wickeleinrichtung wird dieses über eine Leiteinrichtung auf die Wickelrolle geführt.

Die Wickelrolle ist über eine Spannfeder mit der Welle verbunden und bezüglich der Welle vorspannbar, wodurch die Spannung des Stoffteils an die jeweiligen Umstände anpassbar ist.

Die Leiteinrichtung ist in vorteilhafter Weise an der Wellenachse der Welle gehalten und ausrichtbar. Dadurch lässt sich eine einfache Befestigung erreichen, durch die Möglichkeit der Ausrichtung kann das Zugseil in optimaler Weise auf die Wickeleinrichtung geführt werden.

In vorteilhafter Weise weist die Leiteinrichtung eine erste drehbare Rolle, deren Achse im wesentlichen senkrecht zur Wellenachse und zum in die Leiteinrichtung einlaufenden Zugseil steht, eine zweite Rolle und eine dritte Rolle auf, deren Achsen im wesentlichen parallel zur Wellenachse ausgerichtet sind. Dadurch wird eine optimale Einführung des Zugseils auf die Wickelrolle erreicht, unabhängig davon, aus welcher Richtung das Zugseil zugeführt wird.

Indem die dritte Rolle in einer Halterung gehalten ist, die um eine Schwenkachse schwenkbar ist, welche senkrecht zur Wellenachse und zur Achse der dritten Rolle steht, wird eine optimale Wicklung auf der Wickelrolle erreicht.

Ausführungsformen der erfindungsgemässen Einrichtung werden nachfolgend anhand der beiliegenden Zeichnung beispielhaft näher erläutert.

Es zeigt:
Fig. 1 in räumlicher und teilweise auseinander gezogener Darstellung die Ansicht einer ersten Ausführungsform der erfindungsgemässen Beschattungseinrichtung;
Fig. 2 in schematischer Ansicht die Anordnung der Rollen der ersten Ausführungsform der erfindungsgemässen Beschattungseinrichtung gemäss Fig. 1;
Fig. 3 eine Draufsicht auf eine zweite Ausführungsform einer erfindungsgemässen Beschattungseinrichtung;
Fig. 4 in schematischer Darstellung die Anordnung der Rollen für die Ausführungsform der erfindungsgemässen Beschattungseinrichtung gemäss Fig. 3;
Fig. 5 eine Draufsicht auf die Spannfeder und die Wickeleinrichtung;
Fig. 6 eine Schnittdarstellung der Einrichtung gemäss Fig. 5;
Fig. 7 eine Darstellung im Schnitt der Wickeleinrichtung;
Fig. 8 eine räumliche Ansicht der Wickeleinrichtung; und
Fig. 9 eine weitere räumliche Ansicht der Wickeleinrichtung.

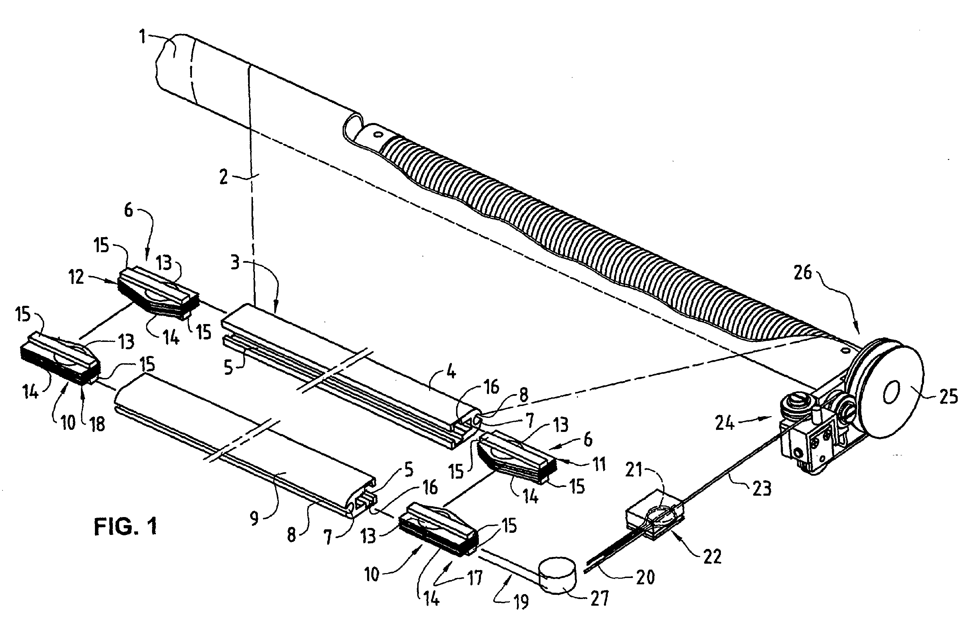

Wie aus Fig. 1 ersichtlich ist, umfasst die erfindungsgemässe Beschattungseinrichtung eine drehbar gelagerte und antreibbare Welle 1. Diese Welle 1 ist an nicht dargestellten Tragteilen, die die Flächenelemente beispielsweise eines Wintergartens tragen, in bekannter Weise befestigt. Der Antrieb kann in bekannter Weise von Hand erfolgen, er kann aber auch einen Motor umfassen, der in die Welle integriert ist. Auf die Welle 1 aufwickelbar und von dieser abwickelbar ist ein Stoffteil 2, welcher im abgewickelten Zustand eines oder mehrere Flächenelemente abdecken kann.

Am abwickelseitigen Ende 3 des Stoffteils 2 ist eine erste Profilschiene 4 angebracht. Diese erste Profilschiene 4 erstreckt sich über die Länge des abwickelseitigen Endes 3 des Stoffteils 2, welches im wesentlichen parallel zur Welle 1 ausgerichtet ist. Diese erste Profilschiene 4 ist mit einer längsverlaufenden Rille 5 ausgestattet, welche auf der Seite der ersten Profilschiene 4 angebracht ist, die dem Stoffteil gegenüberliegend ist.

In diese Rille 5 sind erste Umlenkmittel 6 einschiebbar und in einer gewünschten Position in bekannter Weise fixierbar.

Die erste Profilschiene 4 ist ferner mit einer Längsnut 7 versehen, die der Rille 5 gegenüberliegend ist, und weist einen kreisförmigen Querschnitt auf mit einem längsverlaufenden Spalt 8, dessen Öffnung in einem der Rille 5 abgewandten Bereich der ersten Profilschiene 4 verläuft. In dieser Längsnut 7 ist der Stoffteil 2 befestigt, indem das abwickelseitige Ende 3 mit einer geschlossenen Schlaufe versehen ist, die in die Längsnut 7 eingelegt ist, und in welche Schlaufe ein Stab eingeführt werden kann.

An den Tragteilen ist eine zweite Profilschiene 9 befestigt, die gleich ausgebildet ist wie die erste Profilschiene 4, und ebenfalls eine Rille 5 und eine Längsnut 7 mit entsprechendem Spalt 8 aufweist. Diese zweite Profilschiene 9 ist so an den Tragteilen befestigt, dass sie der ersten Profilschiene 4 benachbart ist, wenn der Stoffteil 2 voll abgewickelt ist. In bekannter Weise ist diese zweite Profilschiene 9 schwenkbar mit den Tragteilen verbunden, indem in die kreisförmige Rille 5 Bolzen eingesetzt sind, die einen Steg aufweisen, der durch den Spalt aus der zweiten Profilschiene 9 herausragt und an den Tragteilen fixiert werden kann. Dadurch kann sich die zweite Profilschiene selbständig bezüglich der ersten Profilschiene 4 bzw. des Stoffteils 2 ausrichten. Die zweite Profilschiene 9 lässt sich durch Verschieben in Längsrichtung bezüglich der Befestigungsmittel auf die erste Profilschiene 4 bzw. den Stoffteil 2 ausrichten.

In die Rille 5 der zweiten Profilschiene 9 sind entsprechend der ersten Profilschiene 4 zweite Umlenkmittel 10 eingesetzt.

Die ersten Umlenkmittel 6, die in die erste Profilschiene 4 eingesetzt sind, umfassen eine erste Rollenanordnung 11 und eine zweite Rollenanordnung 12. Beide Rollenanordnungen 11 und 12 bestehen aus Rollen 13, die zwischen Plättchen 14 drehbar gehalten sind. Die äusseren Plättchen sind jeweils mit einem Steg 15 versehen, die in Längsausnehmungen 16 passend sind, die in der Rille 5 der ersten Profilschiene 4 angebracht sind.

Die zweiten Umlenkmittel 10 umfassen ebenfalls eine erste Rollenanordnung 17 und eine zweite Rollenanordnung 18. Diese Rollenanordnungen 17 und 18 sind ebenfalls mit Rollen 13 versehen, die in Plättchen 14 gehalten sind. Das oberste und unterste Plättchen weist ebenfalls einen Steg 15 auf, die in Längsausnehmungen 16 der Rille 5 der zweiten Profilschiene 9 passend sind.

Über diese Rollenanordnungen 11, 12, 17 und 18 ist ein seilartiger Teil 19 geführt, der eine Schlaufe 20 bildet, wie nachfolgend noch beschrieben wird. Das Ende 21 dieser Schlaufe 20 ist über ein bekanntes Verbindungsmittel 22 mit einem Zugseil 23 verbunden. Das Zugseil 23 wird über eine Leiteinrichtung 24 auf eine Wickelrolle 25 der Wickeleinrichtung 26 geführt, wie ebenfalls später noch im Detail beschrieben wird.

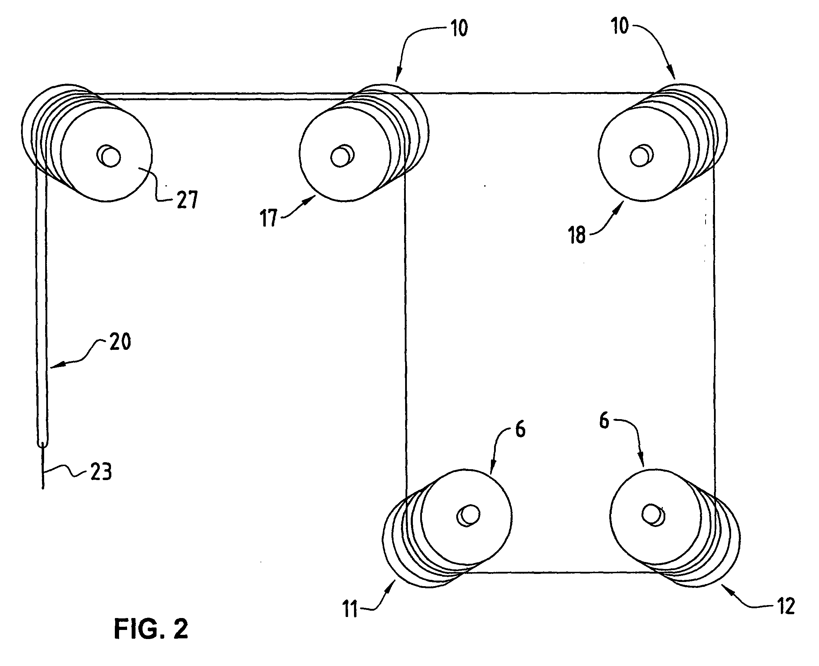

Wie aus der schematischen Darstellung in Fig. 2 ersichtlich ist, verläuft die Schlaufe 20 vom Zugseil 23 her, mit dem sie verbunden ist, über zusätzlich vorgesehene Umlenkrollen 27, die auch in Fig. 1 dargestellt sind, zur ersten Rollenanordnung 17 der zweiten Umlenkmittel 10, von dort zur ersten Rollenanordnung 11 der ersten Umlenkmittel 6, danach zur zweiten Rollenanordnung 12 der ersten Umlenkmittel 6, von hier zur zweiten Rollenanordnung 18 der zweiten Umlenkmittel 10 und über die erste Rollenanordnung 17 der zweiten Umlenkmittel 10 über die weiteren Umlenkrollen 27 zurück zum Zugseil 23 bzw. der nicht dargestellten Verbindungsmittel. Durch diese Schlaufenführung wird ein optimaler Zug auf die erste Profilschiene 4 (Fig. 1), in welcher sich die ersten Umlenkmittel 6 befinden, ausgeübt, der in optimaler Weise auf den entsprechenden Stoffteil übertragen wird. Die Schlaufe verläuft zwischen den ersten Umlenkmitteln 6 innerhalb der ersten Profilschiene 5 (Fig. 1), während sie zwischen den zweiten Umlenkmitteln 10 innerhalb der zweiten Profilschiene 9 (Fig. 1) verläuft. Wenn die weiteren Umlenkrollen 27 ebenfalls an dieser zweiten Profilschiene angeordnet sind, verläuft auch dieser Bereich der Schlaufe innerhalb der zweiten Profilschiene 9, so dass sie für den Betrachter nicht sichtbar ist, was sich vorteilhaft auf die ästhetische Wirkung dieser Beschattungseinrichtung auswirkt.

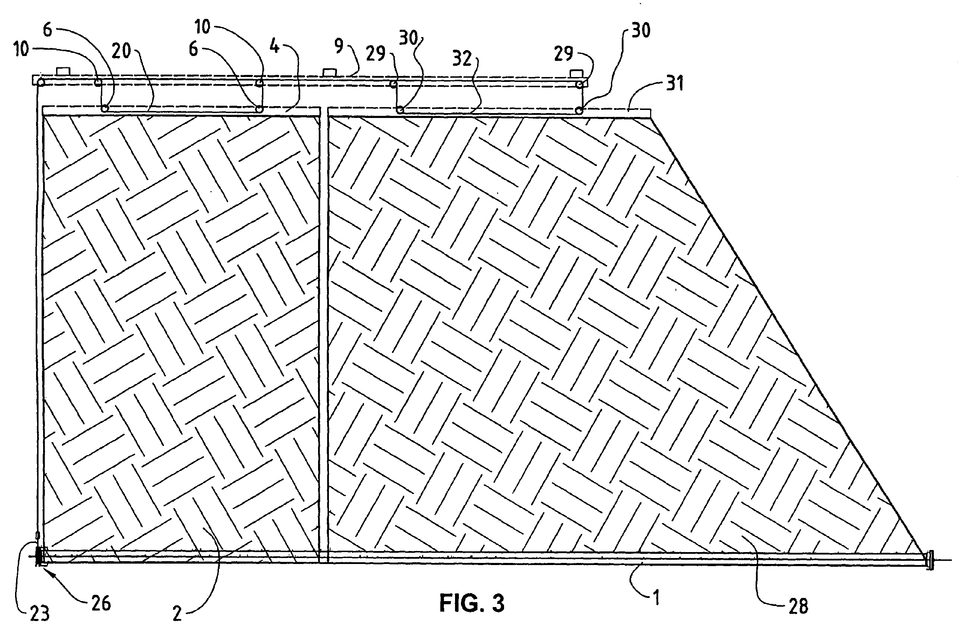

Wie aus Fig. 3 ersichtlich ist, in welcher eine zweite Ausführungsform der erfindungsgemässen Beschattungseinrichtung dargestellt ist, kann auf der Welle 1 neben einem ersten Stoffteil 2 noch ein weiterer Stoffteil 28 auf- und abgewickelt werden, die nebeneinander auf der Welle 1 angeordnet sind. Der Stoffteil 2 ist, wie dies im vorgängigen Ausführungsbeispiel beschrieben worden ist, mit einer ersten Profilschiene 4 ausgestattet, die mit ersten Umlenkmittel 6 versehen ist. Diese ersten Umlenkmittel 6 wirken, wie vorgängig beschrieben worden ist, mit zweiten Umlenkmittel 10 zusammen, die in der zweiten Profilschiene 9 gehalten sind, entsprechend zum vorhergehenden Ausführungsbeispiel. Als Zugmittel ist wiederum eine Schlaufe 20 angebracht, entsprechend der Schlaufe 20 im vorhergehenden Ausführungsbeispiel, die mit dem Zugseil 23 verbunden ist, welche auf die Wickeleinrichtung 26 geführt ist.

Die zweite Profilschiene 9 ist gemäss Fig. 3 über das Ende der ersten Profilschiene 4 des Stoffteils 2 hinaus nach rechts verlängert. In diesem verlängerten Bereich sind weitere zweite Umlenkmittel 29 angebracht, die mit weiteren ersten Umlenkmitteln 30 zusammenwirken, die in der weiteren ersten Profilschiene 31 gehalten sind, und die ihrerseits am weiteren Stoffteil 28 befestigt ist. Über die weiteren ersten Umlenkmittel 30 und die weiteren zweiten Umlenkmittel 23 ist eine weitere Schlaufe 32 gelegt, die von der Funktion her der Schlaufe 20 entspricht. Diese weitere Schlaufe 32 ist ebenfalls mit dem Zugseil 23 verbunden.

Beim Abwickeln des Stoffteils 2 und des weiteren Stoffteils 28 von der Welle 1 wird das Zugseil 23 auf der Wickelrolle 26 aufgewickelt. Die Schlaufe 20 und die weitere Schlaufe 32 ziehen den Stoffteil 2 bzw. den weiteren Stoffteil 28 über die zweiten Umlenkmittel 10 bzw. 29 gegen die zweite Profilschiene 9 und halten sie gespannt. Durch die Verwendung von Schlaufen 20 bzw. 32, welche frei auf den ersten Umlenkmitteln 6 bzw. 30 und den zweiten Umlenkmitteln 10 bzw. 29 aufliegen, erfolgt ein optimales Spannen der Stoffteile 2 bzw. 28 über deren gesamte Breite.

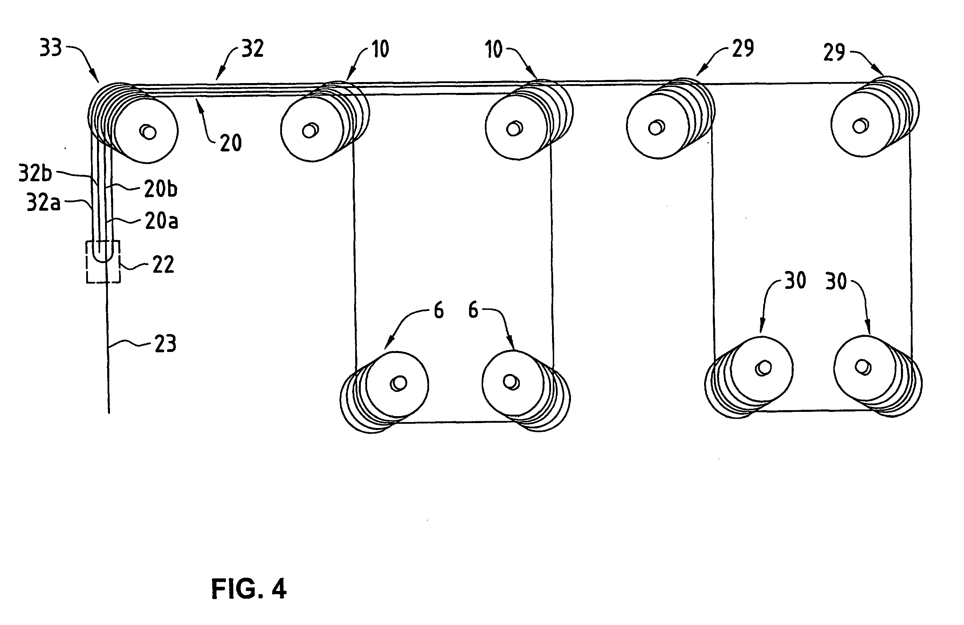

Aus der schematischen Darstellung in Fig. 4 ist die Anordnung der entsprechenden Umlenkmittel und der beiden Schlaufen 20 und 32 ersichtlich. Die Schlaufe 20 wird, wie beim vorhergehenden Ausführungsbeispiel über Umlenkrollen 33, die auch in Fig. 3 ersichtlich ist und an der zweiten Profilschiene 9 befestigt sind, über die ersten Umlenkmittel 6 und die zweiten Umlenkmittel 10 entsprechend der vorhergehenden Beschreibung geführt. Das eine Schlaufenende 20a ist über die Verbindungsmittel 22 mit dem Zugseil 23 verbunden, welches Zugseil 23 zur Wickelrolle führt.

Die weitere Schlaufe 32 wird ebenfalls über die Umlenkrollen 33 gelegt, und in gleicher Weise wie die Schlaufe 20 für den Stoffteil 2 zu den zweiten Umlenkmitteln 29 und um die ersten Umlenkmittel 30 für den weiteren Stoffteil 28 geleitet.

Das weitere Schlaufenende 20b der Schlaufe 20 ist über ein Umlenkmittel im Verbindungsmittel 22 mit dem einen Schlaufenende 32a der Schlaufe 32 verbunden. Das weitere Schlaufenende 32b ist im Verbindungsmittel 22 mit dem Zugseil 23 verbunden. Dadurch erfolgt ein Ausgleich der Spannung, die auf die beiden Stoffteile 2 und 28 wirken. Insbesondere kann somit eine Längenänderung des einen Stoffteils bezüglich des anderen, die insbesondere bei unterschiedlichen Formen auftreten kann, im Laufe der Zeit selbsttätig ausgeglichen werden.

Als Umlenkmittel dienen wiederum die Rollenanordnungen, wie sie zur Fig. 1 beschrieben worden sind, und in den entsprechenden Profilschienen eingesetzt sind. Das Seilstück der Schlaufe 20 zwischen den ersten Umlenkmitteln 6 verläuft in der ersten Profilschiene 4, wie aus Fig. 3 ersichtlich ist, das Seilstück der Schlaufe 32 zwischen den ersten Umlenkmitteln 30 verläuft in der weiteren ersten Profilschiene 31, die Seilstücke der Schlaufe 20 und der weiteren Schlaufe 32 zwischen den zweiten Umlenkmitteln 10 und 29 und den Umlenkrollen 33 verlaufen in der zweiten Profilschiene 9.

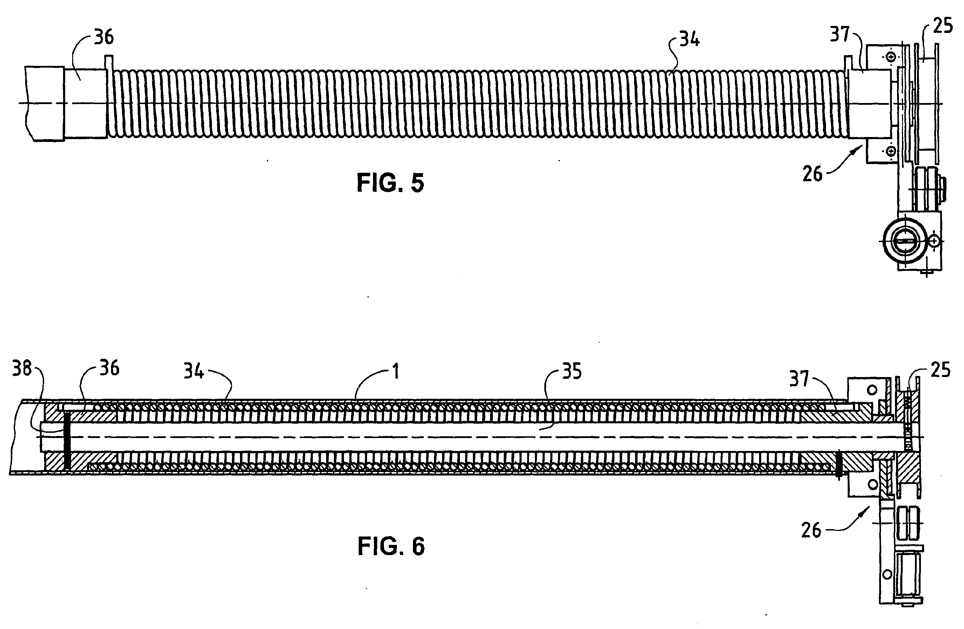

Um eine optimale Spannung der Stoffteile in jeder abgewickelten Position erreichen zu können, ist die Wickelrolle 25 der Wickeleinrichtung 26 mit der Welle über eine Spannfeder 34 verbunden, wie dies aus den Fig. 5 und 6 ersichtlich ist. Die Spannfeder ist auf einem Achsstück 35 aufgesetzt, wobei die Spannfeder an beiden Enden an einer Hülse 36 bzw. 37 befestigt ist, in welche das Achsstück 35 eingeschoben ist. Dieses Paket ist in die Welle 1 eingesetzt.

Die in die Welle 1 eingeschobene Hülse 36 ist über einen Stift 38 fest mit dem Achsstück 35 verbunden. Die am Ende der Welle 1 angeordnete Hülse 37 ist mit der Welle 1 über einen weiteren Bolzen 39 fest verbunden, das Achsstück 35 ist bezüglich dieser Hülse 37 drehbar. Dadurch kann die Wickelrolle 25, auf die das Zugseil aufgewickelt wird, gegenüber der Welle 1 vorgespannt werden, wodurch die Spannkraft auf die Stoffteile eingestellt werden kann. Der Einstellvorgang wird nachfolgend beschrieben.

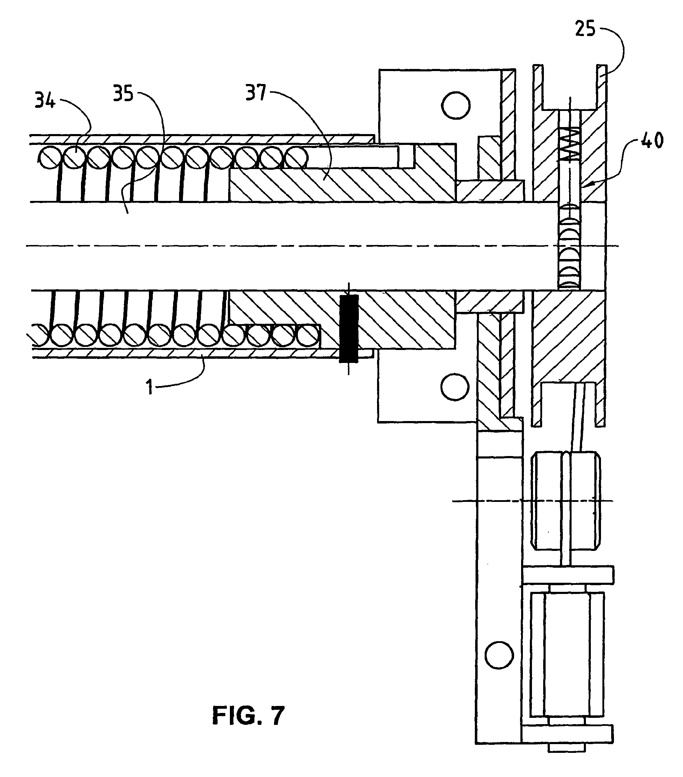

Wie aus Fig. 7 ersichtlich ist, ist die Wickelrolle 25 bezüglich des Achsstückes 35 in einer Richtung verdrehbar, das Verdrehen der Wickelrolle 25 bezüglich des Achsstückes 35 in der anderen Richtung wird durch eine Rücklaufsperre 40, die nur schematisch dargestellt ist, verhindert. Zum Vorspannen bzw. Einstellen der Spannkraft, die über das Zugseil und die Schlaufen auf die Stoffteile ausgeübt werden soll, ist das Zugseil, das an der Wickelrolle 25 befestigt ist, gespannt. In das Ende des Achsstückes 35 kann in bekannter, nicht dargestellter Weise ein Drehschlüssel eingesetzt werden, mit diesem Drehschlüssel kann das Achsstück 35 bezüglich der Wickelrolle 25 verdreht werden. Hierbei wird die Spannfeder 34 über die Hülse 36, die mit dem Achsstück 35 mit dreht, und die Hülse 37, die feststehend ist, gespannt. Die Rücklaufsperre 40 verhindert ein Zurückdrehen der Wickelrolle 25, sie und demzufolge das Zugseil bleibt im vorgespannten Zustand.

Neben der Vorspannung kann mit dieser Spannfeder 34 auch ein Ausgleich des Laufes der Welle 1 und der Wickelrolle 25 erreicht werden. Durch das Abwickeln des Stoffteils von der Welle 1 wird der Durchmesser kleiner. Durch das Aufwickeln des Zugseiles auf der Wickelrolle 25 wird der wirksame Durchmesser grösser. Demzufolge muss zwischen der Welle 1 und der Wickelrolle 25 ein Ausgleich der Rotationsbewegung stattfinden können. Hierdurch wird noch der zusätzliche Effekt erreicht, dass beim Abwickeln der Stoffteile von der Welle 1 die Zugkraft wegen der Veränderung der Durchmesser grösser wird, je mehr der Stoffteil abgewickelt ist, da sich die Wickelrolle 25 wegen des grösser werdenden wirksamen Durchmessers bezüglich der Welle 1 mit kleiner werdendem wirksamen Durchmesser weniger schnell drehen kann. Dadurch wird zusätzlich eine optimale Spannung der Stoffteile erreicht.

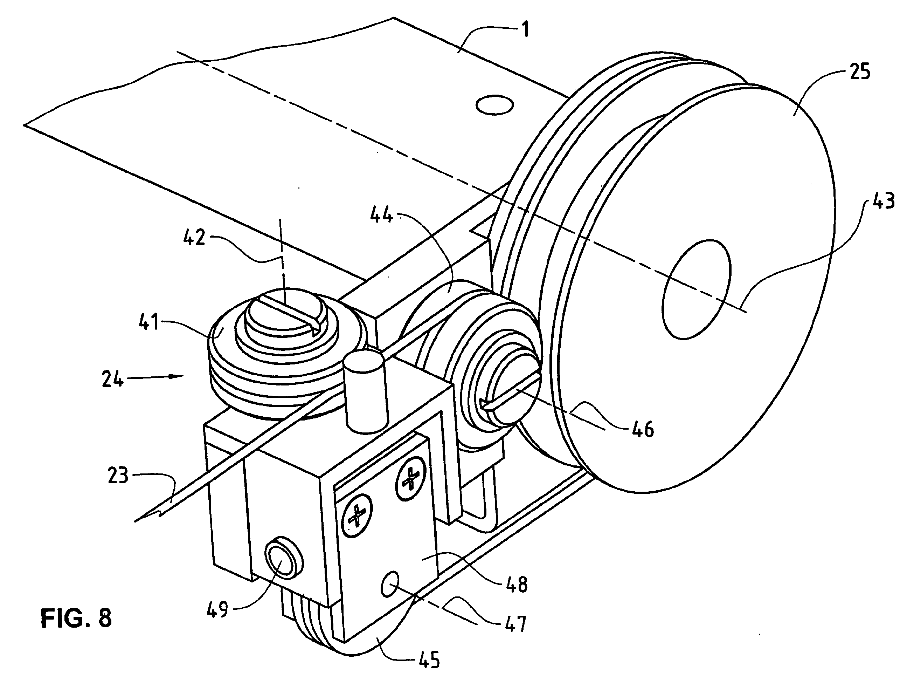

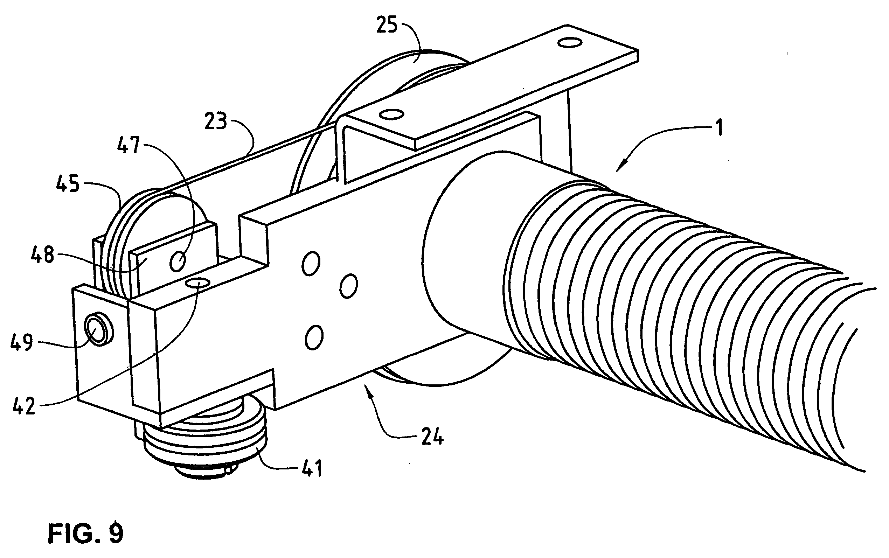

Um eine optimale Wicklung des Zugseiles 23 auf der Wickelrolle 25 zu erhalten, ist der Wickelrolle 25 eine Leiteinrichtung 24 vorgeordnet, wie aus den Fig. 8 und 9 ersichtlich ist. Diese Leiteinrichtung 24 ist in bekannter Weise schwenkbar auf der Welle gehalten und kann in einer eingestellten Lage fixiert werden. Die Leiteinrichtung 24 kann somit in die Ebene ausgerichtet werden, die durch das Zugseil 23 und die Schlaufen gebildet wird. Die Leiteinrichtung 24 weist eine erste drehbare Rolle 41 auf, die um eine Achse 42 drehbar ist, die im wesentlichen senkrecht zur Wellenachse 34 der Welle 1 und zum in die Leiteinrichtung 24 einlaufenden Zugseil 23 steht. Mit dieser ersten Rolle 41 wird erreicht, dass das Zugseil 23 im wesentlichen senkrecht zur Wellenachse 43 und demzufolge auch senkrecht auf die Wickelrolle 25 einläuft. Das einlaufende Zugseil 23 wird danach über eine zweite Rolle 44 und eine dritte Rolle 45 geführt, deren Achsen 46 bzw. 47 im wesentlichen parallel zur Wellenachse 43 ausgerichtet sind.

Die dritte Rolle 45 ist in einer Halterung 48 gehalten, die um eine Schwenkachse 49 schwenkbar ist, welche Schwenkachse 49 in der Leiteinrichtung 24 gehalten ist und senkrecht zur Wellenachse 43 und zur Achse 47 der dritten Rolle 45 steht. Dadurch wird erreicht, dass die Windungen des Zugseils 23 auf der Wickelrolle 25 schön nebeneinander zu liegen kommen, die schwenkbare Halterung 48 kann den hierzu erforderlichen seitlichen Bewegungen des Zugseils 23 folgen. Dadurch wird eine gleichmässige Bewegung der Wickelrolle 25 erhalten, die Spannung des Zugseils 23 und demzufolge der Schlaufen und der Stoffteile bleibt gleichmässig.

In vorteilhafter Weise bestehen die Stoffteile, die für die vorgenannte erfindungsgemässe Beschattungseinrichtung verwendet werden, aus einem Stoff, der eine grosse Flächenstabilität aufweist, wodurch ein Durchhängen einzelner Bereiche vermieden wird. Insbesondere geeignet ist der von der französischen Firma Tissus technique Ferrari SA unter der Bezeichnung "Soltis" vertriebene Stoff.

Für das Zugseil und die Schlaufen kann ein geeignetes Drahtseil verwendet werden, das die Anforderungen erfüllt.

Mit dieser erfindungsgemässen Beschattungseinrichtung können insbesondere Wintergärten ausgestattet werden, die aus unterschiedliche Formen aufweisenden Flächenelementen zusammengesetzt sind. Auf einer Welle können ein oder mehrere Stoffteile aufgewickelt werden, die Anwendungsmöglichkeiten sind praktisch nicht beschränkt. Insbesondere kann die Beschattungseinrichtung rauminnenseitig aber auch raumaussenseitig angeordnet werden.

## Patentansprüche

1. Beschattungseinrichtung für lichtdurchlässige Flächenelemente, insbesondere für Glasflächenelemente von Wintergärten, umfassend eine an Tragteilen, die die Flächenelemente tragen, drehbar lagerbare und antreibbare Welle (1), auf welche die Flächenelemente abdeckende Stoffteile (2, 28) aufwickelbar und abwickelbar sind, und welche Stoffteile (2, 28) mittels Zugelementen, die über die Welle (1) antreibbar sind, und Umlenkmitteln (6, 30, 10, 29) über die abzudeckenden Flächenelemente spannbar sind, **dadurch gekennzeichnet, dass** für jeden Stoffteil (2; 28) ein Zugelement angebracht ist, das aus seilartigen Teilen besteht, wovon mindestens einer eine Schlaufe (20, 32) bildet, welche über erste Umlenkmittel (6, 30), die am abwickelseitigen Ende (3) eines Stoffteils (2, 28) angebracht sind, über zweite Umlenkmittel (10, 29), die an Haltemitteln angebracht sind, die derart an den Tragteilen befestigbar sind, dass diese zweiten Umlenkmittel (10, 29) bei abgewickeltem Stoffteil (2, 28) den ersten Umlenkmitteln (6, 30) benachbart sind, geführt ist und wobei die Schlaufe (20, 32) mit einem Zugseil (23) verbunden ist, das auf einer mit der Welle (1) zusammenwirkenden Wickeleinrichtung (26) auf- und abwickelbar ist.

2. Beschattungseinrichtung nach Anspruch 1, **dadurch gekennzeichnet, dass** am abwickelseitigen Ende (3) des Stoffteils (2, 28) eine erste Profilschiene (4, 31) angebracht ist, die sich mindestens über einen Teil der Länge des im wesentlichen parallel zur Welle (1) ausgerichteten Endes des Stoffteils (2, 28) erstreckt, welche erste Profilschiene (4, 31) mindestens eine längs verlaufende Rille (5) aufweist, in welcher die ersten Umlenkmittel (6, 30) einschiebbar und in einer gewünschten Position fixierbar sind.

3. Beschattungseinrichtung nach Anspruch 2, **dadurch gekennzeichnet, dass** die an den Tragteilen befestigbaren Haltemittel aus einer zweiten Profilschiene (9) gebildet sind, die mindestens eine längs verlaufende Rille (5) aufweist, in welcher die zweiten Umlenkmittel (10, 29) einschiebbar und in einer gewünschten Position fixierbar sind.

4. Beschattungseinrichtung nach Anspruch 3, **dadurch gekennzeichnet, dass** die erste Profilschiene (4, 31) und die zweite Profilschiene (9) jeweils mit einer Längsnut (7) versehen sind, welche der jeweiligen Rille (5) gegenüberliegend ist und welche einen kreisförmigen Querschnitt mit einem verengten, längs verlaufenden Spalt (8) aufweist, dessen Öffnung in einem der Rille (5) abgewandten Bereich der ersten Profilschiene (4, 31) bzw. zweiten Profilschiene (9) verläuft.

5. Beschattungseinrichtung nach Anspruch 3 oder 4, **dadurch gekennzeichnet, dass** die ersten Umlenkmittel (6, 30) und die zweiten Umlenkmittel (10, 29) jeweils aus Rollenanordnungen (11, 12, 17, 18) gebildet sind, und jede Rollenanordnung (11, 12, 17, 18) aus Rollen (13) besteht, die zwischen Plättchen (14) drehbar gehalten sind, und die beiden äusseren Plättchen jeweils mit einem Steg (15) versehen sind, welcher jeweils in eine in der Rille (5) der ersten Profilschiene (4, 31) und der zweiten Profilschiene (9) angebrachte Längsausnehmung (16) passend ist.

6. Beschattungseinrichtung nach Anspruch 5, **dadurch gekennzeichnet, dass** die Schlaufe (20) vom Zugseil (23), mit dem sie verbunden ist, zur ersten Rollenanordnung (17) der zweiten Umlenkmittel (10), zur ersten Rollenanordnung (11) der ersten Umlenkmittel (6), zur zweiten Rollenanordnung (12) der ersten Umlenkmittel (6), zur zweiten Rollenanordnung (18) der zweiten Umlenkmittel (10) und über die erste Rollenanordnung (17) der zweiten Umlenkmittel (10) zurück zum Zugseil (23) geführt ist.

7. Beschattungseinrichtung nach Anspruch 5 oder 6, **dadurch gekennzeichnet, dass** die Schlaufe (20) zwischen der Verbindung mit dem Zugseil (23) und der ersten Rollenanordnung (17) der zweiten Umlenkmittel (10) über weitere Umlenkrollen (27) geführt sind, die am Endbereich der zweiten Profilschiene (9) angebracht sind.

8. Beschattungseinrichtung nach einem der Ansprüche 1 bis 7, **dadurch gekennzeichnet, dass** das Zugseil (23) über eine Leiteinrichtung (24) auf eine Wickelrolle (25) der Wickeleinrichtung (26) auf- und abwickelbar ist.

9. Beschattungseinrichtung nach Anspruch 8, **dadurch gekennzeichnet, dass** die Wickelrolle (25) über eine Spannfeder (34) mit der Welle (1) verbunden ist und bezüglich der Welle (1) vorspannbar ist.

10. Beschattungseinrichtung nach Anspruch 8 oder 9, **dadurch gekennzeichnet, dass** die Leiteinrichtung (24) an der Wellenachse (43) der Welle (1) gehalten und ausrichtbar ist.

11. Beschattungseinrichtung nach einem der Ansprüche 8 bis 10, **dadurch gekennzeichnet, dass** die Leiteinrichtung (24) eine erste drehbare Rolle (41), deren Achse (42) im wesentlichen senkrecht zur Wellenachse (43) und zum in die Leiteinrichtung (24) einlaufenden Zugseil (23) steht, eine zweite Rolle (44) und eine dritte Rolle (45) aufweist, deren Achsen (46 bzw. 47) im wesentlichen parallel zur Wellenachse (43) ausgerichtet sind.

12. Beschattungseinrichtung nach Anspruch 11, **dadurch gekennzeichnet, dass** die dritte Rolle (45) in einer Halterung (48) gehalten ist, die um eine Schwenkachse (49) schwenkbar ist, welche Schwenkachse (49) senkrecht zur Wellenachse (43) und zur Achse (47) der dritten Rolle (45) steht.

## Claims

1. Shading device for transparent surface elements, in particular for glass surface elements of winter gardens, comprising a shaft (1) drivable and rotatably supportable on bearing components which bear the surface elements, on which shaft textile parts (2, 28), covering the surface elements, are able to be wrapped and unwrapped, and which textile parts (2, 28) are stretchable over the surface elements to be covered by means of traction elements which are drivable via the shaft (1) and deflection means (6, 30, 10, 29), **characterised in that** a traction element is mounted for each textile part (2, 28), which traction element consists of cord-type parts, at least one of which forms a loop (20, 32), which is led via first deflection means (6, 30), which are mounted on the unwinding-side end (3) of a textile part (2, 28), via second deflection means (10, 29), which are mounted on holding means that are attachable to the bearing components in such a way that these second deflection means (10, 29) are adjacent to the first deflection means (6, 30) when the textile part (2, 28) is wrapped up, and whereby the loop (20, 32) is connected to a traction cord (23) that is able to be wound and unwound on a winding device (26) co-operating with the shaft (1).

2. Shading device according to claim 1, **characterised in that** mounted on the unwinding-side end (3) of the textile part (2, 28) is a first profiled rail section (4, 31), which extends over at least a portion of the length of the end of the textile part (2, 28) aligned substantially parallel to the shaft (1), which first profiled rail section (4, 31) has at least one longitudinally running groove (5) in which the first guide means (6, 30) are insertable and fixable in a desired position.

3. Shading device according to claim 2, **characterised in that** the holding means attachable to the bearing components are composed of a second profiled rail section (9) having at least one longitudinally running groove (5), in which the second guide means (10, 29) are insertable and fixable in a desired position.

4. Shading device according to claim 3, **characterised in that** the first profiled rail section (4, 31) and the second profiled rail section (9) are each provided with a longitudinal slot (7) which is opposite the respective groove (5) and which has a circular cross section with a constricted, longitudinally running gap (8), the opening of which runs into a region of the first profiled rail section (4, 31) or respectively of the second profiled rail section (9) remote from the groove (5).

5. Shading device according to claim 3 or 4, **characterised in that** the first guide means (6, 30) and the second guide means (10, 29) are each composed of roller configurations (11, 12, 17, 18), and each roller configuration (11, 12, 17, 18) consists of rollers (13) which are rotatably held between platelets (14), and the two outer platelets are each provided with a crosspiece (15), which fits in each case in a longitudinal recess (16) made in the groove (5) of the first profiled rail section (4, 31) and of the second profiled rail section (9)

6. Shading device according to claim 5, **characterised in that** the loop (20) of the traction cord (23) to which it is connected is led to the first roller configuration (17) of the second guide means (10), to the first roller configuration (11) of the first guide means (6), to the second roller configuration (12) of the first guide means (6), to the second roller configuration (18) of the second guide means (10), and, via the first roller configuration (17) of the second guide means (10), back to the traction cord (23).

7. Shading device according to claim 5 or 6, **characterised in that** the loop (20) are <sic. is> led between the connection to the traction cord (23) and the first roller configuration (17) of the second deflection means (10) via further deflection rollers (27), which are mounted on the end area of the second profiled rail section (9).

8. Shading device according to one of the claims 1 to 7, **characterised in that** the traction cord (23) is able to be wound and unwound on a winding roller (25) of the winding device (26) via a control device (24).

9. Shading device according to claim 8, **characterised in that** the winding roller (25) is connected to the shaft (1) via a tension spring (34), and is able to be pretensioned with respect to the shaft (1).

10. Shading device according to claim 8 or 9, **characterised in that** the control device (24) is held on the shaft axis (43) of the shaft (1) and is adjustable.

11. Shading device according to one of the claims 8 to 10, **characterised in that** the control device (24) has a first rotatable roller (41), whose axis (42) is substantially perpendicular to the shaft axis (43) and to the traction cord (23) arriving in the control device (24), a second roller (44) and a third roller (45), whose axes (46 or respectively 47) are aligned substantially parallel to the shaft axis (43).

12. Shading device according to claim 11, **characterised in that** the third roller (45) is held in a support (48) which is pivotable about a pivot axis (49), which pivot axis (49) is perpendicular to the shaft axis (43) and to the axis (47) of the third roller (45).

## Revendications

1. Dispositif de protection solaire pour éléments de surface transparents, en particulier pour des éléments de surface vitrée de jardins d'hiver, comprenant un arbre (1) pouvant être entraîné en rotation et être logé sur des parties support qui portent les élément de surface, arbre sur lequel des pièces de tissu (2, 28) recouvrant les éléments de surface peuvent être enroulées et déroulées et pièces de tissus (2, 28) qui peuvent être tendues sur les éléments de surface à recouvrir, au moyen d'éléments de traction, qui peuvent être entraînés par l'arbre, et par des moyens de renvoi (6, 30, 10, 29) **caractérisé en ce que** pour chaque pièce de tissu (2; 28), il est placé un élément de traction qui se compose de parties formant câble,dont au moins une forme une boucle (20, 32), qui est guidée par des premiers moyens de renvoi (6, 30) qui sont placés à l'extrémité (3) côté déroulement d'une pièce de tissu (2, 28), et par des seconds moyens de renvoi (10, 29) qui sont logés sur des moyens de retenue fixables sur les parties support de sorte que ces second moyens de renvoi (10, 29) sont voisins des premiers moyens de renvoi (6, 30), quand la pièce de tissu (2, 28) est déroulée, et la boucle (20, 32) étant reliée à un câble de traction (23) qui peut être enroulé et déroulé sur un dispositif d'enroulement (26) coopérant avec l'arbre (1).

2. Dispositif de protection solaire selon la revendication 1, **caractérisé en ce que** sur l'extrémité coté déroulement (3) de la pièce de tissu (2, 28), il est placé une première glissière profilée (4, 31) qui s'étend au moins sur une partie de la longueur de l'extrémité de la pièce de tissu (2, 28), dirigée essentiellement parallèlement à l'arbre (1), première glissière profilée (4, 31) qui présente au moins une nervure s'étendant longitudinalement (5) dans laquelle les premiers moyens de renvoi (6, 30) peuvent être insérés et fixés dans une position souhaitée.

3. Dispositif de protection solaire selon la revendication 2, **caractérisé en ce que** les moyens de retenue fixables sur les parties support sont composés d'une seconde glissière profilée (9) qui présente au moins une rainure longitudinale (5) dans laquelle les seconds moyens de renvoi (10, 29) sont insérables et fixables dans une position souhaitée.

4. Dispositif de protection solaire selon la revendication 3, **caractérisé en ce que** la première glissière profilée (4, 31) et la seconde glissière profilée (9) sont respectivement munies d'une rainure longitudinale (7) qui est opposée à la rainure respective (5)qui présente une section transversale circulaire avec une fente longitudinale rétrécie (8), dont l'ouverture s'étend dans une zone de la première glissière profilée (4, 31) respectivement de la seconde glissière profilée (9), cette zone étant détournée de la rainure (5).

5. Dispositif de protection solaire selon la revendication 3 ou 4, **caractérisé en ce que** les premiers moyens de renvoi (6, 30) et les seconds moyens de renvoi (10, 29) sont formés respectivement de dispositifs à poulies (11, 12, 17, 18) et chaque dispositif à poulies (1, 12, 17, 18) se compose de poulies qui sont maintenues rotatives entre des plaquettes (14) et les deux plaquettes externes (5) sont munies respectivement d'une traverse (15) qui s'engage respectivement dans un évidement longitudinal (16) ménagé dans la rainure (5) de la première glissière profilée (4, 31) et de la seconde glissière profilée (9).

6. Dispositif de protection solaire selon la revendication 5, **caractérisé en ce que** la boucle (20) est guidée par le câble de traction (23) auquel elle est reliée, au premier dispositif à poulie (17) des seconds moyens de renvoi (10), au premier dispositif à poulies (11) des premiers moyens de renvoi (6), au second dispositif à poulies(12) des premiers moyens de renvoi (6), au second dispositif à poulies (18) des secondes moyens de renvoi (10) et par le premier dispositif à poulies (17) des secondes moyens de renvoi (10) pour revenir au câble de traction (23).

7. Dispositif de protection solaire selon la revendication 5 ou 6, **caractérisé en ce que** la boucle (20) est guidée entre la jonction avec le câble de traction (23) et la première disposition à poulies (17) des seconds moyens de renvoi (10) par d'autres poulies de renvoi (27) qui sont placées dans la zone d'extrémité de la seconde glissière profilée (9).

8. Dispositif de protection selon l'une des revendications 1 à 7, **caractérisé en ce que** le câble de traction (23) est enroulable et déroulable par un dispositif de commande (24) sur une poulie d'enroulement (25) du dispositif d'enroulement (26).

9. Dispositif de protection solaire selon la revendication 8, **caractérisé en ce que** la poulie d'enroulement (25) est reliée par un ressort de tension (34) à l'arbre (1) et peut être précontrainte par rapport à l'arbre (1).

10. Dispositif de protection solaire selon la revendication 8 ou 9, **caractérisé en ce que** le dispositif de commande (24) est maintenu sur l'axe (43) de l'arbre (1) et peut être orienté.

11. Dispositif de protection solaire selon l'une des revendications 8 à 10, **caractérisé en ce que** le dispositif de commande (24) présente une première poulie rotative (41) dont l'axe (42) est essentiellement perpendiculaire à l'axe d'arbre (43) et au câble de traction (23) entrant dans le dispositif de commande (24), une seconde poulie (44) et une troisième poulie (45) dont les axes (46 respectivement 47) sont orientés sensiblement parallèles à l'axe d'arbre (43).

12. Dispositif de protection solaire selon la revendication 11, **caractérisé en ce que** la troisième poulie (45) est maintenue dans une fixation (48) qui est pivotante autour d'un axe de pivotement (49), l'axe de pivotement (49) étant perpendiculaire à l'axe d'arbre (43) et à l'axe (47) de la troisième poulie (45).
